# EUROPEAN PATENT APPLICATION

(11) **EP 3 220 284 A1**
(43) Date of publication of application: **20.09.2017**
(21) Application number: 14905678.0
(22) Date of filing: 14.11.2014
(51) Int. Cl.: G06F 17/30, G06F 12/00

(54) **DATA ACQUISITION PROGRAM, DATA ACQUISITION METHOD AND DATA ACQUISITION DEVICE**

(71) Applicant: Fujitsu Limited, Kawasaki-shi, Kanagawa 211-8588 (JP)
(72) Inventor: MAITA, Tsuyoshi, Kanagawa 211-8588 (JP); NORO, Nobumi, Kanagawa 211-8588 (JP); TANAKA, Tetsu, Hirosaki-shi Aomori 036-8064 (JP)
(74) Representative: Hoffmann Eitle
(86) International application number: PCT/JP2014/080272
(87) International publication number: WO 2016/075833

(57) **Abstract**

Provided are a data acquisition program, a data acquisition method, and a data acquisition device that can support the registration of a location of data to be extracted from an HTML document. The data acquisition program causes a computer (100) to execute a process (133) of extracting first data and second data that are separated from each other by a predetermined tag or symbol, from a document written in HTML. The data acquisition program also causes the computer to execute a process (134) of displaying the extracted first data and the extracted second data in an associated manner. The data acquisition program also causes the computer to execute a process (135) of specifying a position of a tag included in the document on a hierarchical structure with respect to the first data or the second data in the document, upon detecting that the displayed first data or the displayed second data is selected. The data acquisition program also causes the computer to execute a process (135) of allowing registration of the position on the hierarchical structure.

## Description

### [Technical Field]

The present invention relates to a data acquisition program, a data acquisition method, and a data acquisition device.

### [Background Art]

A crawler tool is known as a tool for collecting information disclosed on the Internet. The crawler tool visits websites on the Internet, and stores the content per uniform resource locator (URL), in other words, per page. Moreover, a method of providing information to a user has been developed in which the information is analyzed with ontology with a relation between lexicons defined from the page content that has been stored; useful information is cut out and is automatically extracted based on the rule; and pieces of information having the same meaning and any other piece of information are integrated.

Furthermore, a method of extracting information in a tabular format or a database format based on a tag included in a document in HyperText Markup Language (HTML), and extracting information having a relation with an attribute that is dependent on an item, and the attribute value, based on dependency between pieces of information indicated by the tag, has been developed. In a method of extracting pieces of information from the tabular format, a piece of information that is placed immediately above, immediately below, or immediately left side of information in the tabular format, is extracted as the item. A piece of information placed in the upper end row or the left end column in the tabular format is the attribute, and a piece of information placed below or on the right side of the above is extracted as the attribute value.

### [Citation List]

### [Non Patent Citation]

Patent Document 1: Japanese Laid-open Patent Publication No. 2004-62446
Patent Document 2: Japanese Laid-open Patent Publication No. 2010-15202

### [Summary of Invention]

### [Technical Problem]

However, for example, when the ontology is used, a relation between lexicons needs to be registered in advance. Thus, it is difficult to extract information not included in the ontology. Moreover, for example, when predetermined positions in the tabular format are extracted as the item, the attribute, and the attribute value, when an item appears in the middle of the tabular format, the item is sometimes extracted as an attribute value. Hence, it is difficult to extract information corresponding to tables in various formats.

In one aspect, the present invention provides a data acquisition program, a data acquisition method, and a data acquisition device that can support the registration of a location of data to be extracted from an HTML document. Solution to Problem

### [Solution to Problem]

In one aspect, the data acquisition program causes a computer to execute a process of extracting first data and second data that are separated from each other by a predetermined tag or symbol, from a document written in HTML. Moreover, the data acquisition program causes the computer to execute a process of displaying the extracted first data and the extracted second data in an associated manner. Furthermore, the data acquisition program causes the computer to execute a process of specifying a position of a tag included in the document on a hierarchical structure with respect to the first data or the second data in the document, upon detecting that the displayed first data or the displayed second data is selected. Still furthermore, the data acquisition program causes the computer to execute a process of allowing registration of the position on the hierarchical structure.

### [Advantageous Effects of Invention]

It is possible to support the registration of a location of data to be extracted from an HTML document.

### [Brief Description of Drawings]

FIG. 1 is a block diagram illustrating a structural example of a data acquisition device.
FIG. 2 is a diagram illustrating an example of a target storage unit.
FIG. 3 is a diagram illustrating an example of a page storage unit.
FIG. 4 is a diagram illustrating an example of an extracted data storage unit.
FIG. 5 is a diagram illustrating an example of a position storage unit.
FIG. 6 is a diagram illustrating an example of an HTML document and a selection screen of extracted data.
FIG. 7 is a diagram illustrating another example of an HTML document and a selection screen of extracted data.
FIG. 8 is a diagram illustrating another example of an HTML document and a selection screen of extracted data.
FIG. 9 is a diagram illustrating another example of an HTML document and a selection screen of extracted data.
FIG. 10 is a flowchart illustrating an example of a registration process.
FIG. 11 is a diagram illustrating an example of a computer that executes a data acquisition program.

### [Embodiments for Carrying Out the Invention]

Hereinafter, embodiments of a data acquisition program, a data acquisition method, and a data acquisition device disclosed in the present application will be described in detail with reference to the accompanying drawings. It is to be noted that the disclosed technology is not limited to the present embodiments. Moreover, the following embodiments may be suitably combined in a range without contradiction.

### Embodiments

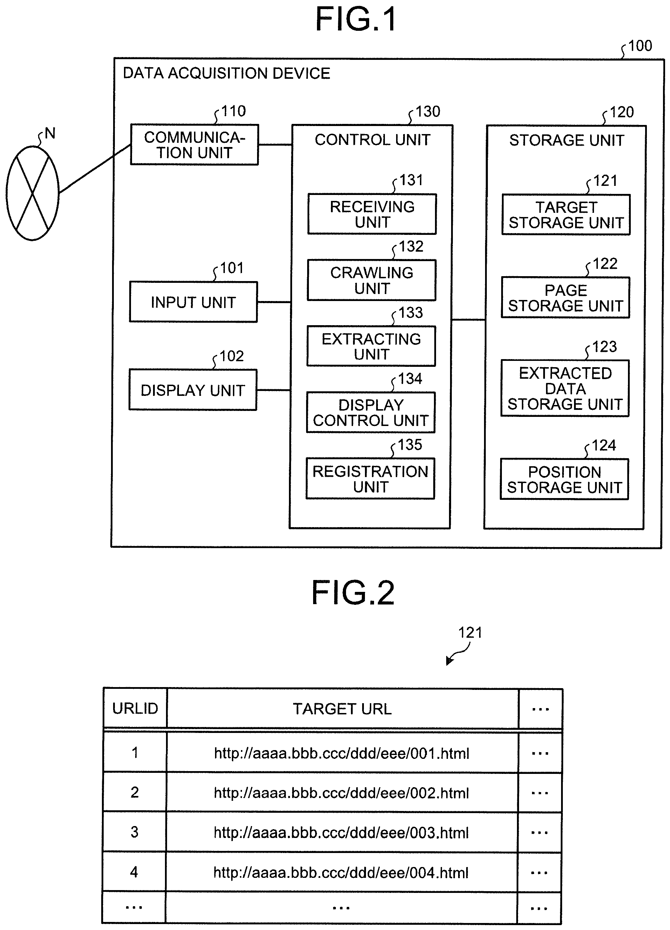

FIG. 1 is a block diagram illustrating a structural example of a data acquisition device. For example, a data acquisition device 100 illustrated in FIG. 1 is connected to the Internet via a network N, visits websites (hereinafter, may also be referred to as sites) on the Internet specified by an administrator, and acquires and stores predetermined data in a database. For example, the data acquisition device 100 visits tourist attraction sites and tourist information sites provided by prefectural governments, so as to acquire tourist information on a certain region, and acquires data such as the address, the telephone number, and explanatory sentences of tourist attractions. In such a case, the formats of various data are often not unified over the tourist attraction sites and the tourist information sites. Thus, when first data and second data are separated by a predetermined tag or symbol, the data acquisition device 100 acquires the first data and the second data as a pair of an item name and the value, from an HTML document. In other words, the data acquisition device 100 acquires data with a predetermined regularity from the HTML document, as a pair.

In other words, the data acquisition device 100 extracts first data and second data that are separated from each other by a predetermined tag or symbol, from a document written in HTML. Moreover, the data acquisition device 100 displays the extracted first data and the extracted second data in an associated manner. Furthermore, the data acquisition device 100 specifies the position of a tag included in the document on a hierarchical structure with respect to the first data or the second data in the document to allow registration of the position on the hierarchical structure, upon detecting that the displayed first data or the displayed second data is selected. Consequently, the data acquisition device 100 can extract and display data having a relation between an item and value, for example. Moreover, when the displayed data is selected, the data acquisition device 100 specifies the position of the tag corresponding to the data in the document, on the hierarchical structure. Hence, it is possible to support the registration of a location of data to be extracted from the HTML document.

In this example, the HTML document is an example of a document including tag configuration information. For example, the document including the tag configuration information may be a document described in markup language, an Extensible Markup Language (XML) document, or the like. The following explanation exemplifies visiting websites written in an HTML document.

Next, the structure of the data acquisition device 100 will be described. As illustrated in FIG. 1, the data acquisition device 100 includes an input unit 101, a display unit 102, a communication unit 110, a storage unit 120, and a control unit 130. The data acquisition device 100 may also include various functional units included in a known computer in addition to the functional units illustrated in FIG. 1.

For example, the input unit 101 is an input device such as a keyboard and a mouse, and receives an input of various types of information from an administrator of the data acquisition device 100. For example, the administrator of the data acquisition device 100 enters the URL of the site to be visited, data items to be acquired, and the like into the input unit 101. The input unit 101 then outputs the input results to the control unit 130. Moreover, for example, the input unit 101 may be a secure digital (SD) memory card reader/writer and the like. For example, the input unit 101 outputs the URL of the site to be visited, a data item to be acquired, and the like, that are read out from the SD memory card, to the control unit 130. The input unit 101 may include the input device as well as the SD memory card reader/writer and the like.

The display unit 102 is a display device for displaying various types of information. For example, the display unit 102 is implemented by a liquid crystal display and the like as a display device. When display data is input from the control unit 130, the display unit 102 displays the display data that has been input. For example, the display unit 102 may include the SD memory card reader/writer, as an output unit. Moreover, for example, the input unit 101 and the display unit 102 may be an integrated device such as a touch panel and a liquid crystal display.

For example, the communication unit 110 is implemented using a network interface card (NIC) or the like. The communication unit 110 is a communication interface that is wirelessly or wiredly connected to the Internet via the network N, and communicates information with servers of various sites on the Internet. For example, the communication unit 110 receives page content such as an HTML document and an image file from various sites on the Internet. The communication unit 110 outputs the received page content to the control unit 130. Moreover, the communication unit 110 transmits a page request or the like that is input from the control unit 130 to various sites on the Internet.

For example, the storage unit 120 is implemented using a storage device including a semiconductor memory element such as a random access memory (RAM) and a flash memory; a hard disk; and an optical disc. The storage unit 120 includes a target storage unit 121, a page storage unit 122, an extracted data storage unit 123, and a position storage unit 124. The storage unit 120 also stores therein information to be used for processing performed in the control unit 130.

The target storage unit 121 stores therein the URL of a site that is an object to be crawled and from which data is to be acquired (hereinafter, referred to as a target URL) and the URL ID in an associated manner. FIG. 2 is a diagram illustrating an example of a target storage unit. As illustrated in FIG. 2, the target storage unit 121 includes items such as the "URL ID" and the "target URL". For example, the target storage unit 121 stores therein a single record for each target URL.

The "URL ID" identifies the target URL. The "target URL" indicates the URL of the HTML document that is to be accessed by crawling. For example, the administrator uses the input device of the input unit 101 for entering the target URL.

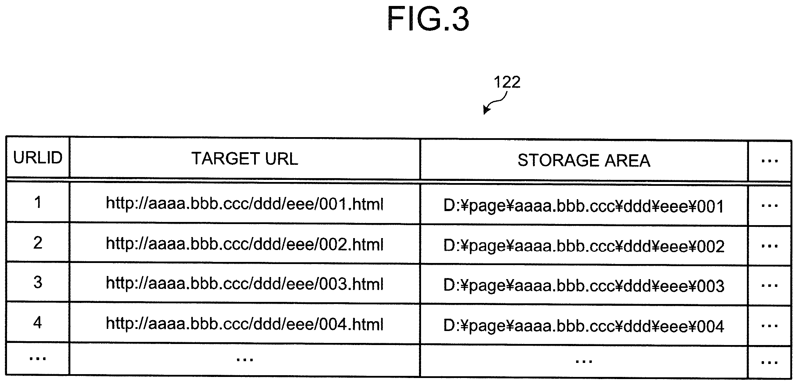

Returning to the explanation of FIG. 1, the page storage unit 122 stores therein the page content, in other words, the HTML document and the image file, for example, that are acquired by accessing the target URL by crawling. FIG. 3 is a diagram illustrating an example of a page storage unit. As illustrated in FIG. 3, the page storage unit 122 includes items such as the "URL ID", the "target URL", and the "storage area". For example, the page storage unit 122 stores therein a single record for each target URL.

The "URL ID" identifies the target URL. The "target URL" indicates the URL of the HTML document that is accessed by crawling. The "storage area" is a storage area in which the acquired HTML document, the image file, and the like are stored. For example, the storage area stores therein a directory of a file system of the storage unit 120, and stores the HTML document, the image file, and the like in the corresponding directory. The page storage unit 122 may also store therein the acquired HTML document and image file in the storage area, in a direct manner.

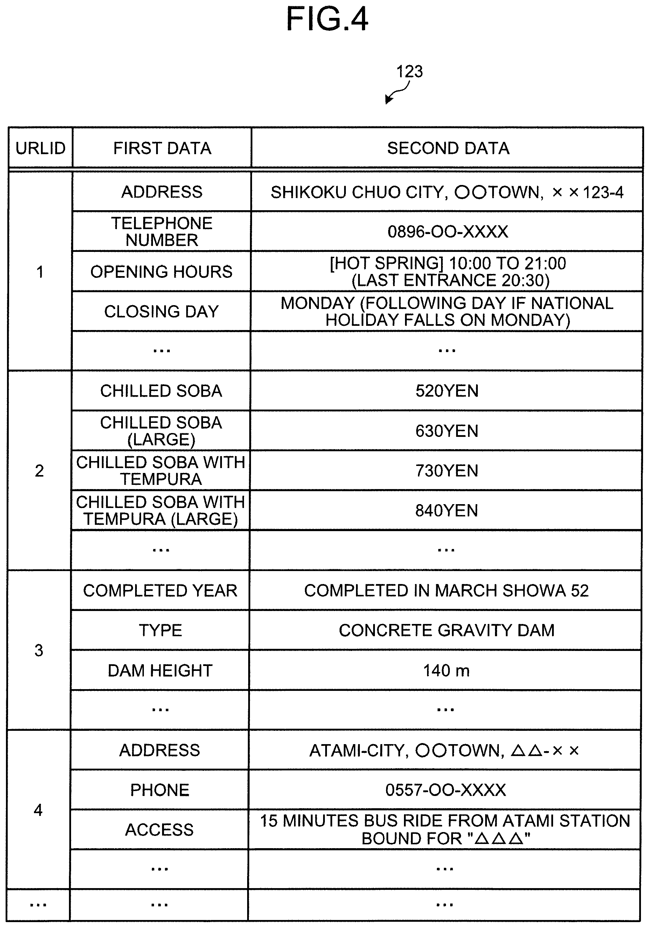

Returning to the explanation of FIG. 1, the extracted data storage unit 123 stores therein the first data and the second data extracted from the HTML document. In other words, the extracted data storage unit 123 is a database that stores therein data collected by crawling. FIG. 4 is a diagram illustrating an example of an extracted data storage unit. As illustrated in FIG. 4, the extracted data storage unit 123 includes items such as the "URL ID", the "first data", and the "second data". For example, the extracted data storage unit 123 stores therein a pair or more of the first data and the second data in the corresponding HTML document, for each URL ID. The data stored in the extracted data storage unit 123 can be easily registered in the items of a document of any desired format.

The "URL ID" identifies the target URL. For example, the "first data" is the first data when two data are separated by a predetermined tag or symbol. For example, the "second data" is the second data when two pieces of data are separated by a predetermined tag or symbol. In the example in the first row of FIG. 4, the first pair of the URL ID "1" includes "address" as the first data and "Shikoku Chuo city, oo town, ××123-4" as the second data.

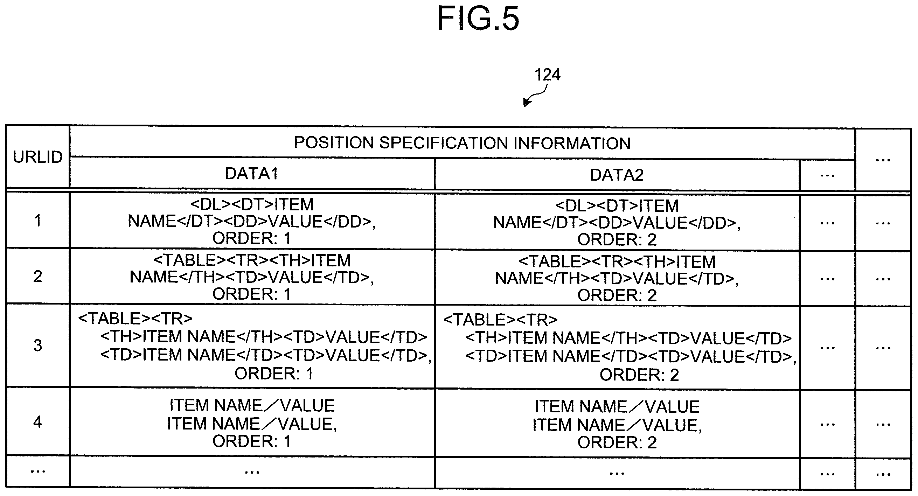

Returning back to the explanation of FIG. 1, the position storage unit 124 stores therein position specification information of the first data and the second data in the HTML document, and the URL ID in an associated manner. In other words, the position storage unit 124 stores therein the position of a tag in an HTML document on the hierarchical structure as the definition for extracting data from the HTML document. FIG. 5 is a diagram illustrating an example of a position storage unit. As illustrated in FIG. 5, the position storage unit 124 includes items such as the "URL ID" and the "position specification information". For example, the position storage unit 124 stores therein a single record for each URL ID.

The "URL ID" identifies the target URL. The "position specification information" indicates the position specification information of the first data and the second data. Furthermore, the position specification information includes items such as "DATA 1" and "DATA 2". For example, the "DATA 1" indicates the position specification information on the first pair of the first data and the second data, in the corresponding HTML document. For example, the "DATA 2" indicates the position specification information on the second pair of the first data and the second data, in the corresponding HTML document.

In the example in the first row of FIG. 5, the "DATA 1" of the URL ID "1" is the first pair having a delimiter, in which the first data (item name) and the second name (value) are separated by a </DT><DD> tag. The "DATA 2" is the second pair having a delimiter, in which the first data (item name) and the second data (value) are separated by the </DT><DD> tag.

In the example in the second row of FIG. 5, the "DATA 1" of the URL ID "2" is the first pair having a delimiter, in which the first data (item name) and the second data (value) are separated by a </TH><TD> tag. Moreover, the "DATA 2" is the second pair having a delimiter, in which the first data (item name) and the second data (value) are separated by the </TH><TD> tag.

Moreover, in the example in the third row of FIG. 5, the "DATA 1" of the URL ID "3" is the first pair of a table, in which the first data (item name) and the second data (value) are separated by the </TH><TD> tag or a </TD><TD> tag. Moreover, the "DATA 2" is the second pair of the table, in which the first data (item name) and the second data (value) are separated by the </TH><TD> tag or the </TD><TD> tag.

In the example in the fourth row of FIG. 5, the "DATA 1" of the URL ID "4" is the first pair having a delimiter, in which the first data (item name) and the second data (value) are separated by "/" (slash mark). Moreover, the "DATA 2" is the second pair having a delimiter, in which the first data (item name) and the second data (value) are separated by "/" (slash mark).

Returning to the explanation in FIG. 1, for example, the control unit 130 is implemented when a program stored in an internal storage device is executed by, for example, a central processing unit (CPU) or a micro processing unit (MPU), using a RAM as a work area. Moreover, for example, the control unit 130 may be implemented by an integrated circuit such as an application specific integrated circuit (ASIC) and a field programmable gate array (FPGA). The control unit 130 includes a receiving unit 131, a crawling unit 132, an extracting unit 133, a display control unit 134, and a registration unit 135, and implements or executes functions and operations of information processing, which will be described below. The internal structure of the control unit 130 is not limited to the structure illustrated in FIG. 1, and may be another structure as long as the structure performs the following information processing.

The receiving unit 131 receives a target URL to be visited by crawling. For example, when the administrator operates the input device of the input unit 101, the receiving unit 131 receives an input of the target URL. The receiving unit 131 stores the received target URL in the target storage unit 121.

By referring to the target storage unit 121, the crawling unit 132 accesses a website including the target URL, such as the top page of a certain tourist information site, for example. In other words, the crawling unit 132 transmits a page request to the server of the certain tourist information site via the communication unit 110, and receives the page content from the server via the communication unit 110. For example, the crawling unit 132 accesses the website including the target URL regularly or irregularly, in other words, at an interval specified by the administrator in advance or at an optional timing. For example, the specified interval may be any interval such as a day, a week, or a month. By referring to the target storage unit 121, the crawling unit 132 selects the target URL from which the page content is to be acquired, from all the links in the website. For example, the crawling unit 132 selects the target URL of a page for each of the tourist attractions. The crawling unit 132 acquires the page content from the selected target URL. The crawling unit 132 stores the acquired page content in the page storage unit 122. Moreover, the crawling unit 132 outputs acquisition completion information indicating that the acquisition of page content has completed, to the extracting unit 133.

Upon receiving the acquisition completion information from the crawling unit 132, the extracting unit 133 extracts data to be paired, from the page content of the target URL that is stored in the page storage unit 122. The extracting unit 133 extracts the first data and the second data that are separated from each other by a predetermined tag or symbol as data to be paired. The extracting unit 133 associates the first data and the second data to be paired for each URL ID of the target URL, and stores the first data and the second data in the extracted data storage unit 123. When the first data and the second data that have been extracted are stored in the extracted data storage unit 123, the extracting unit 133 outputs extraction completion information to the display control unit 134.

When the URL ID of the target URL is already stored in the position storage unit 124, the extracting unit 133 reads out the position specification information from the position storage unit 124, and may use the position specification information as the definition for extracting data. Consequently, the extracting unit 133 can easily extract data to be paired, from the site visited in the past, based on the position specification information that is registered when the site is visited in the past.

In this example, the first data and the second data that are separated from each other by a predetermined tag or symbol are data corresponding to the title in a table as well as data corresponding to a cell relating to the title, the first data and the second data being interposed between tags indicating the start and the end of the table, for example. Moreover, the first data and the second data that are separated from each other by a predetermined tag or symbol are data corresponding to a word in a list as well as data corresponding to the explanation relating to the word, the first data and the second data being interposed between tags indicating the start and the end of the list, for example.

Furthermore, the predetermined tag may be </DT><DD> that is a combination of a </DT> tag indicating the end of a DT tag and a <DD> tag indicating the start of a DD tag, for example. Still furthermore, the predetermined tag may be </TH><TD> that is a combination of a </TH> tag indicating the end of a TH tag that is a part of a TABLE tag, and a <TD> tag indicating the start of a TD tag, for example. Still furthermore, for example, the predetermined symbol may be symbols such as "/ (slash)", ": (colon)", and "→ (arrow)", and may be any symbol as long as the symbol can be used as a delimiter between sentences, and a delimiter between the item name and the content of the item. The predetermined symbol may also be a fullsized character (double byte character) or a half-sized character (single byte character). Moreover, the alphabet portion of the predetermined tag may be case-insensitive. In other words, the predetermined tag may be </DT><dd> or </th><td>, or </dt><DD> or </tH><Td>. Furthermore, one or more space and a newline may be included between the predetermined symbols of </TH> and <TD>. Still furthermore, the start tags of <DD>, <TD>, and <TH> may include the specification of attributes. For example, tags such as <DD style="color:red;"> and <TD nowrap> are also identifiable as the predetermined tag.

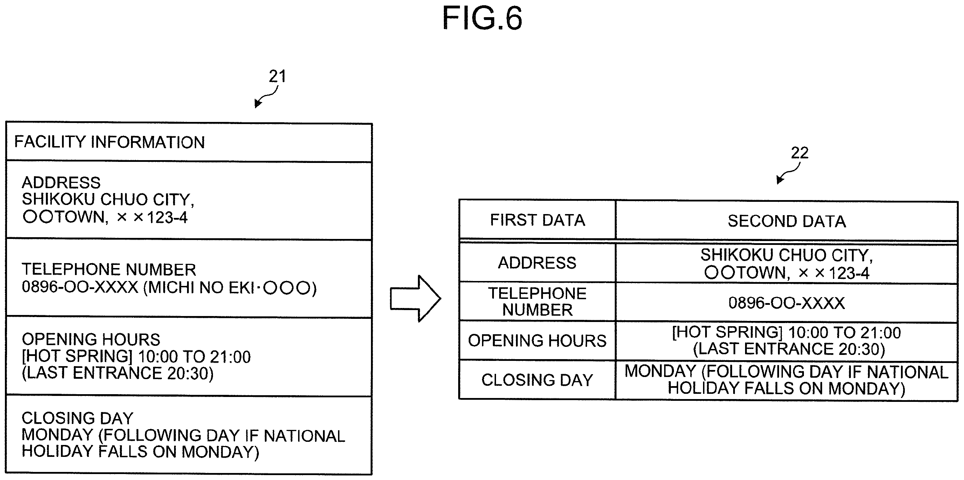

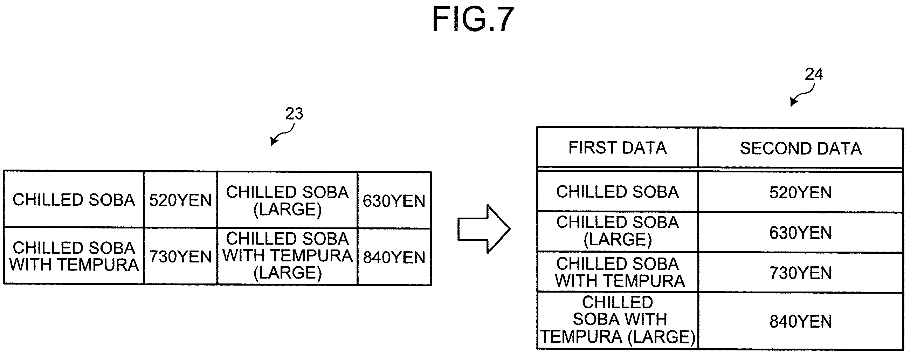

Upon receiving the extraction completion information from the extracting unit 133, the display control unit 134 refers to the extracted data storage unit 123, generates display data by associating the extracted first data and the extracted second data with each other, and outputs and displays the generated display data on the display unit 102. With reference to FIG. 6 to FIG. 9, an HTML document and a selection screen in which the extracted first data and the extracted second data are associated with each other will be described. FIG. 6 is a diagram illustrating an example of an HTML document and a selection screen of extracted data. FIG. 7 to FIG. 9 are diagrams each illustrating another example of an HTML document and a selection screen of extracted data.

In the example illustrated in FIG. 6, for example, an HTML document 21 includes an item name and the value for the address, telephone number, opening hours, and closing day. In the HTML document 21, for example, a DL tag for displaying a list is used, and an area surrounded by DT tags is the first data and an area surrounded by DD tags is the second area. By using </DT/><DD> as a delimiter between the first data and the second data, the extracting unit 133 extracts the data in the HTML document 21, and stores the extracted data in the extracted data storage unit 123. By referring to the extracted data storage unit 123, the display control unit 134 causes the display unit 102 to display a selection screen 22. For example, in the selection screen 22, the first data and the second data are displayed in an associated manner, such as the "address" is the first data, and "Shikoku Chuo city, oo town, ××123-4" is the second data.

In the example illustrated in FIG. 7, for example, an HTML document 23 includes menu and the price. In the HTML document 23, for example, a TABLE tag is used, and an area surrounded by TH tags is the first data and an area surrounded by TD tags is the second data. By using </TH><TD> as a delimiter between the first data and the second data, the extracting unit 133 extracts data from the HTML document 23, and stores the extracted data in the extracted data storage unit 123. By referring to the extracted data storage unit 123, the display control unit 134 causes the display unit 102 to display a selection screen 24. For example, in the selection screen 24, the first data and the second data are displayed in an associated manner, such as "chilled soba" is the first data, and "520 yen" is the second data.

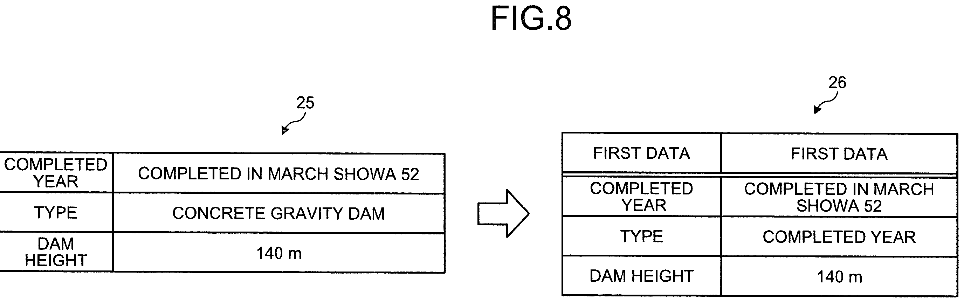

In the example illustrated in FIG. 8, for example, an HTML document 25 includes an item name in the first row, and the value in the second row. In the HTML document 25, for example, the table that is formed by TABLE tags, is formed by two rows of TH tags or TD tags, as illustrated in the third row in FIG. 5. The HTML document 25 includes an item name and the value for the completed year, type, and dam height, respectively, and an area surrounded by the tags in the first row is the first data, and an area surrounded by the tags in the second row is the second data. The extracting unit 133 uses the </TH><TD> tag or the </TD><TD> tag as a delimiter between the first data and the second data, and extracts data from the HTML document 25 using the first row as the item name and the second row as the value, and stores the extracted data in the extracted data storage unit 123. By referring to the extracted data storage unit 123, the display control unit 134 causes the display unit 102 to display a selection screen 26. For example, in the selection screen 26, the first data and the second data are displayed in an associated manner, such as the "completed year" is the first data, and "completed in March, Showa 52" is the second data.

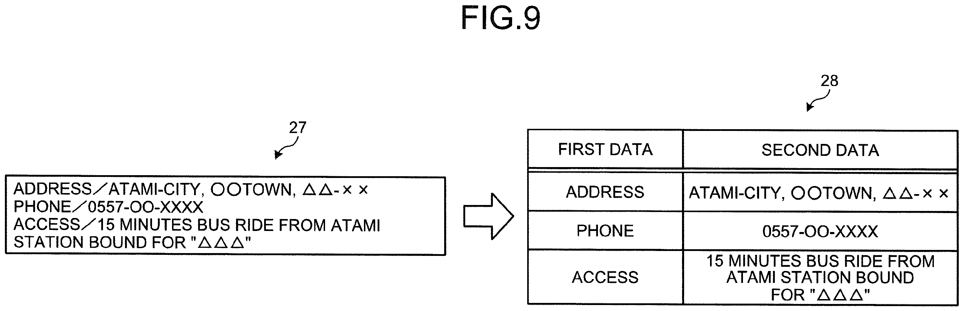

In the example illustrated in FIG. 9, for example, an HTML document 27 includes an item name and the value for the address, phone, and access. In the HTML document 27, a "/ (slash)" symbol is used, and data before "/" is the first data, and data after "/" is the second data. By using "/" as a delimiter between the first data and the second data, the extracting unit 133 extracts data from the HTML document 27 and stores the extracted data in the extracted data storage unit 123. By referring to the extracted data storage unit 123, the display control unit 134 causes the display unit 102 to display a selection screen 28. For example, in the selection screen 28, the first data and the second data are displayed in an associated manner, such as the "address" is the first data, and "Atami-city, oo town, ΔΔ-××" is the second data.

Returning to the explanation in FIG. 1, for example, the registration unit 135 detects that the administrator has operated the input device of the input unit 101, and that the first data or the second data on the selection screen displayed on the display unit 102 is selected. Upon detecting that the first data or the second data is selected, the registration unit 135 specifies the position of the tag on the hierarchical structure with respect to the first data or the second data that have been selected, in the HTML document. For example, upon detecting that the "address" displayed on the selection screen 22 illustrated in FIG. 6 is selected, the registration unit 135 specifies that the DT tag corresponding to the "address" in the HTML document 21 is the first DT tag in the HTML document 21. The registration unit 135 may also specify the position of the tag on the hierarchical structure with respect to the first data as well as the second data, when the first data or the second data is selected. The registration unit 135 then stores the position of the specified tag on the hierarchical structure, in the position storage unit 124. In other words, the registration unit 135 registers the position of the specified tag on the hierarchical structure in the position storage unit 124, as position specification information. The registered position specification information may be used for easily extracting data, during the next crawling, in other words, when the sites are visited the next time.

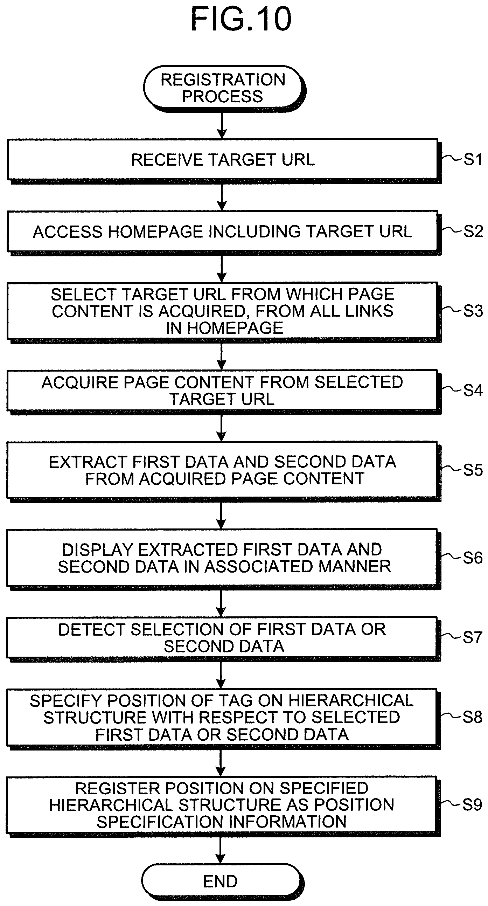

Next, an operation of the data acquisition device 100 of the embodiment will be described. FIG. 10 is a flowchart illustrating an example of a registration process.

For example, when the administrator operates the input device of the input unit 101, the receiving unit 131 receives an input of a target URL (step S1). The receiving unit 131 then stores the received target URL in the target storage unit 121. The crawling unit 132 refers to the target storage unit 121 regularly or irregularly, and accesses a website including the target URL (step S2). The crawling unit 132 then refers to the target storage unit 121, and selects the target URL from which the page content is to be acquired, from all the links in the website (step S3).

The crawling unit 132 then acquires the page content from the selected target URL (step S4). The crawling unit 132 stores the acquired page content in the page storage unit 122. Moreover, the crawling unit 132 outputs acquisition completion information indicating that the acquisition of the page content has completed, to the extracting unit 133.

Upon receiving the acquisition completion information from the crawling unit 132, the extracting unit 133 extracts the first data and the second data from the page content of the target URL that is stored in the page storage unit 122 (step S5). The extracting unit 133 stores the first data and the second data to be paired, for each URL ID of the target URL, in an associated manner, in the extracted data storage unit 123. Upon storing the extracted first data and the extracted second data in the extracted data storage unit 123, the extracting unit 133 outputs extraction completion information to the display control unit 134.

Upon receiving the extraction completion information from the extracting unit 133, the display control unit 134 refers to the extracted data storage unit 123, and causes the display unit 102 to display the extracted first data and the extracted second data in an associated manner (step S6).

For example, the registration unit 135 detects that the administrator has operated the input device of the input unit 101, and that the first data or the second data on the selection screen displayed on the display unit 102 is selected (step S7).

Upon detecting that the first data or the second data is selected, the registration unit 135 specifies the position of the tag on the hierarchical structure with respect to the first data or the second data that have been selected, in the HTML document (step S8). The registration unit 135 registers the position of the specified tag on the hierarchical structure in the position storage unit 124, as position specification information (step S9). Consequently, the data acquisition device 100 can extract and display data having a relation, for example, between an item and value. Moreover, because the data acquisition device 100 specifies the position of the tag on the hierarchical structure corresponding to the data in the document, when the displayed data is selected, it is possible to support the registration of a location of data to be extracted from the HTML document.

In this manner, the data acquisition device 100 extracts the first data and the second data that are separated from each other by a predetermined tag or symbol, from the document written in HTML. Moreover, the data acquisition device 100 displays the extracted first data and the extracted second data in an associated manner. Furthermore, the data acquisition device 100 specifies the position of the tag included in the document on the hierarchical structure, of the first data or the second data in the document to allow registration of the position on the hierarchical structure, upon detecting that the displayed first data or the displayed second data is selected. As a result, it is possible to support the registration of a location of data to be extracted from the HTML document.

Moreover, the data acquisition device 100 extracts data corresponding to the title in a table as well as data corresponding to a cell relating to the title, the data corresponding to the title in a table and the data corresponding to a cell relating to the title being interposed between tags indicating the start and the end of the table as the first data and the second data that are separated by a predetermined tag or symbol. As a result, the data on the title and the data on the cell relating to the title can be easily extracted from the table.

Furthermore, the data acquisition device 100 extracts data corresponding to a word in a list as well as data corresponding to an explanation relating to the word, the data corresponding to a word in a list and the data corresponding to an explanation relating to the word being interposed between tags indicating the start and the end of a list as the first data and the second data that are separated by a predetermined tag or symbol. As a result, the data on the word, and the data on the explanation of the word can be easily extracted from the list.

Still furthermore, the data acquisition device 100 uses </DT><DD> or </TH><TD> as the predetermined tag. As a result, it is possible to easily extract the first data and the second data to be paired, from the list or the table.

Still furthermore, the data acquisition device 100 uses / or :, as the predetermined symbol. As a result, even when a tag is not used, it is possible to easily extract the first data and the second data to be paired.

In the embodiment described above, the first data and the second data that are separated from each other by the predetermined tag or symbol are extracted from the document written in HTML. However, it is not limited thereto. For example, the first data and the second data that are separated from each other by the predetermined symbol may be extracted from a document written in plain text. Moreover, a space may be used instead of the predetermined symbol, and a control character for a line feed, such as CR and LF, may be used.

In the embodiment described above, the item name and the value are extracted as the first data and the second data. However, it is not limited thereto. For example, if a plurality of values are present for a certain item name, such as states of a device like when the device is connected to an external battery and when the device is using the internal battery, the number of pieces of data to form a set may be increased.

Moreover, the components of each unit illustrated in the drawings need not be physically configured as illustrated. That is, the specific mode of dispersion and integration of each unit is not limited to the ones illustrated in the drawings, and all or a part thereof can be functionally or physically dispersed and integrated in an optional unit, depending on various kinds of load and the status of use. For example, the crawling unit 132 and the extracting unit 133 may be integrated.

Furthermore, all or an optional part of various process functions performed by the devices may be executed on the CPU (or a micro computer such as an MPU and a micro controller unit (MCU)). Moreover, all or an optional part of the various process functions may be executed on a program that is analyzed and executed by the CPU (or a micro computer such as an MPU and an MCU), or on hardware by the wired logic.

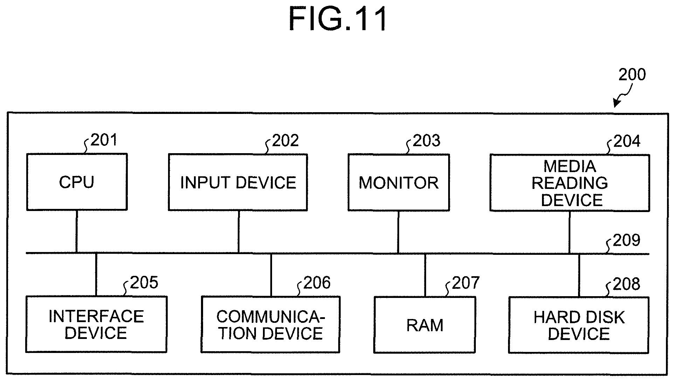

The various processes described in the above embodiment may be implemented by executing prepared programs on a computer. Consequently, in the following, an example of a computer that executes a program having the similar function as that of the above embodiment will be described. FIG. 11 is a diagram illustrating an example of a computer that executes a data acquisition program.

As illustrated in FIG. 11, a computer 200 includes a CPU 201 that executes various computation processes, an input device 202 that receives data input, and a monitor 203. The computer 200 also includes a media reading device 204 that reads out a program and the like from a recording medium, an interface device 205 that connects with various devices, and a communication device 206 that connects with the other information processing devices and the like either wired or wireless. The computer 200 further includes a RAM 207 that temporarily stores therein various types of information, and a hard disk device 208. The devices 201 to 208 are connected to a bus 209.

The hard disk device 208 stores therein a data acquisition program having the similar functions as those of the processing units of the receiving unit 131, the crawling unit 132, the extracting unit 133, the display control unit 134, and the registration unit 135 that are illustrated in FIG. 1. The hard disk device 208 also stores therein the target storage unit 121, the page storage unit 122, the extracted data storage unit 123, the position storage unit 124, and various types of data for implementing the data acquisition program. The input device 202 has a function similar to that of the input unit 101, and for example, receives inputs of various types of information such as the target URL and the administrator information, from the administrator of the computer 200. The monitor 203 has a function similar to that of the display unit 102, and for example, displays various screens such as a management information screen, a reception screen, and a selection screen, for the administrator of the computer 200. For example, the interface device 205 is connected to a printing device and any other device. For example, the communication device 206 has a function similar to that of the communication unit 110 illustrated in FIG. 1, and is connected to the network N. The communication device 206 receives and transmits various types of information with the site on the Internet.

The CPU 201 performs various processes, by reading out the programs stored in the hard disk device 208, and developing the programs on the RAM 207 to execute. The programs can also function as the receiving unit 131, the crawling unit 132, the extracting unit 133, the display control unit 134, and the registration unit 135 of the computer 200 illustrated in FIG. 1.

The above data acquisition program need not be stored in the hard disk device 208. For example, the computer 200 may read out and execute the program stored in a storage medium that is readable by the computer 200. For example, the storage medium readable by the computer 200 corresponds to a portable type recording medium such as a CD-ROM, a DVD disk, and a universal serial bus (USB) memory; a semiconductor memory such as a flash memory; a hard disk drive; and the like. It is also possible to store the data acquisition program in a device that is connected to a public channel, the Internet, a LAN, or the like, and causes the computer 200 to read out and executes the data acquisition program from the above-described network.

### [Explanation of Reference]

- 100: data acquisition device
- 101: input unit
- 102: display unit
- 110: communication unit
- 120: storage unit
- 121: target storage unit
- 122: page storage unit
- 123: extracted data storage unit
- 124: position storage unit
- 130: control unit
- 131: receiving unit
- 132: crawling unit
- 133: extracting unit
- 134: display control unit
- 135: registration unit
- N: network

## Claims

1. A data acquisition program that causes a computer to execute a process comprising:
extracting first data and second data that are separated from each other by a predetermined tag or symbol, from a document written in HTML;
displaying the extracted first data and the extracted second data in an associated manner; and
specifying a position of a tag included in the document on a hierarchical structure with respect to the first data or the second data in the document to allow registration of the position on the hierarchical structure, upon detecting that the displayed first data or the displayed second data is selected.

2. The data acquisition program according to claim 1, wherein the first data and the second data that are separated by the predetermined tag or symbol are data corresponding to a title in a table as well as data corresponding to a cell relating to the title, the first data and the second data being interposed between tags indicating a start and an end of the table.

3. The data acquisition program according to claim 1, wherein the first data and the second data that are separated by the predetermined tag or symbol are data corresponding to a word in a list as well as data corresponding to an explanation relating to the word, the first data and the second data being interposed between tags indicating a start and an end of the list.

4. The data acquisition program according to claim 1, wherein the predetermined tag is </DT><DD> or </TH><TD>.

5. The data acquisition program according to claim 1, wherein the predetermined symbol is / or :.

6. A data acquisition method that causes a computer to execute a process comprising:
extracting first data and second data that are separated from each other by a predetermined tag or symbol, from a document written in HTML;
displaying the extracted first data and the extracted second data in an associated manner; and
specifying a position of a tag included in the document on a hierarchical structure with respect to the first data or the second data in the document to allow registration of the position on the hierarchical structure, upon detecting that the displayed first data or the displayed second data is selected.

7. The data acquisition method according to claim 6, wherein the first data and the second data that are separated by the predetermined tag or symbol are data corresponding to a title in a table as well as data corresponding to a cell relating to the title, the first data and the second data being interposed between tags indicating a start and an end of the table.

8. The data acquisition method according to claim 6, wherein the first data and the second data that are separated by the predetermined tag or symbol are data corresponding to a word in a list as well as data corresponding to an explanation relating to the word, the first data and the second data being interposed between tags indicating a start and an end of the list.

9. The data acquisition method according to claim 6, wherein the predetermined tag is </DT><DD> or </TH><TD>.

10. The data acquisition method according to claim 6, wherein the predetermined symbol is / or :.

11. A data acquisition device comprising:
an extracting unit configured to extract first data and second data that are separated from each other by a predetermined tag or symbol, from a document written in HTML;
a display control unit configured to display the extracted first data and the extracted second data in an associated manner; and
a registration unit configured to specify a position of a tag included in the document on a hierarchical structure with respect to the first data or the second data in the document to allow registration of the position on the hierarchical structure, upon detecting that the displayed first data or the displayed second data is selected.

12. The data acquisition device according to claim 11, wherein the first data and the second data that are separated by the predetermined tag or symbol are data corresponding to a title in a table as well as data corresponding to a cell relating to the title, the first data and the second data being interposed between tags indicating a start and an end of the table.

13. The data acquisition device according to claim 11, wherein the first data and the second data that are separated by the predetermined tag or symbol are data corresponding to a word in a list as well as data corresponding to an explanation relating to the word, the first data and the second data being interposed between tags indicating a start and an end of the list.

14. The data acquisition device according to claim 11, wherein the predetermined tag is </DT><DD> or </TH><TD>.

15. The data acquisition device according to claim 11, wherein the predetermined symbol is / or :.
